# EUROPÄISCHE PATENTSCHRIFT

(11) **EP 2 071 826 B1**
(45) Veröffentlichungstag und Bekanntmachung des Hinweises auf die Patenterteilung: **13.02.2019**
(21) Anmeldenummer: 08021123.8
(22) Anmeldetag: 04.12.2008
(51) Int. Cl.: H04N 3/14, H04N 5/335

(54) **Bildsensor**
Image sensor
Capteur d'images

(30) Priorität: 07.12.2007 DE 102007058973
(43) Veröffentlichungstag der Anmeldung: 17.06.2009
(73) Patentinhaber: ARNOLD & RICHTER CINE TECHNIK GMBH & CO. BETRIEBS KG, 80799 München (DE)
(72) Erfinder: Cieslinski, Michael, 85521 Ottobrunn (DE)
(74) Vertreter: Manitz Finsterwald Patentanwälte PartmbB

(56) Entgegenhaltungen:
- US-A1- 2002 154 347
- US-A1- 2004 135 910
- US-A1- 2004 159 771
- US-A1- 2006 013 485
- US-A1- 2006 231 732
- US-A1- 2006 261 255
- US-A1- 2006 268 137
- US-A1- 2007 228 256
- US-B1- 6 377 304

## Beschreibung

Die vorliegende Erfindung betrifft einen Bildsensor, insbesondere einen CMOS-Bildsensor, für elektronische Kameras, mit einer Vielzahl von in Zeilen und Spalten angeordneten lichtempfindlichen Pixeln, deren Signale über eine Vielzahl von Spaltenleitungen zu Spaltenverstärkern geführt werden, wobei jeder Spaltenleitung ein Spaltenverstärker zugeordnet ist.

Bekannte elektronische Kameras enthalten einen Bildsensor, der eine Vielzahl von in Zeilen und Spalten angeordneten lichtempfindlichen Elementen bzw. Pixel umfasst, welche durch ein Objektiv der Kamera fallendes Licht in elektrische Signale umwandeln. Zum Auslesen eines Bildes wird jedes der Pixel adressiert, wobei ein jedes Pixel einem jeweiligen Bildpunkt des Bildes entspricht, und ein Signal, das zu einer durch eine Belichtung gesammelten Ladung des Pixels proportional ist, wird zu einem Ausgang des Bildsensors geleitet.

Ein derartiger Bildsensor weist für jede Zeile eine eigene Zeilenauswahlleitung und für jede Spalte zumindest eine eigene Spaltenleitung auf.

Das Auslesen eines derartigen Bildsensors erfolgt üblicherweise zeilenweise, d.h. Zeile für Zeile. Hierzu werden mittels der jeweiligen Zeilenauswahlleitung die Pixel der jeweiligen Zeile auf die Spaltenleitungen geschaltet. Jeder der Spaltenleitungen ist ein eigener Spaltenverstärker zugeordnet, um die an den Spaltenleitungen anliegenden Signale der ausgewählten Pixel zu verstärken. Die verstärkten Signale werden dann über eine Multiplexereinrichtung zu dem Ausgang oder - falls mehrere Ausgänge vorgesehen sind, wie es zur Erreichung einer hohen Bildrate bevorzugt ist - den Ausgängen des Bildsensors geführt. Die genannten Spaltenverstärker sind also bezüglich der Signalausleserichtung zwischen den lichtempfindlichen Elementen und der Multiplexereinrichtung angeordnet.

Um einen hohen Dynamikbereich für den Bildsensor zu erreichen, werden die Pixel und Spaltenverstärker sehr rauscharm und damit besonders empfindlich ausgebildet. Dadurch führt bereits eine kleine Signalverfälschung zu einer verfälschten Helligkeit des dem jeweiligen verstärkten Signal entsprechenden Bildpunkts. Eine derartige Störung ist, sofern sie zufällig auftritt, mit dem Auge jedoch nicht wahrnehmbar.

Wenn eine Signalverfälschung jedoch durch einen der Spaltenverstärker verursacht wird, tritt die Störung bei allen Pixeln der dem Spaltenverstärker zugeordneten Spalte des Bildsensors und damit bei allen Bildpunkten der entsprechenden Spalte des Bildes auf, so dass im Bild ein vertikaler Streifen sichtbar wird, der mit dem Auge wahrnehmbar ist. Durch die hohe Anzahl von Spaltenverstärkern ist es sehr wahrscheinlich, dass ein einzelner Spaltenverstärker von den übrigen Spaltenverstärkern stark abweicht und eine derartige wahrnehmbare Signalverfälschung verursacht.

Ein Bildsensor mit den Merkmalen des Oberbegriffs des Anspruchs 1 ist aus der US 2002/0154347 A1 bekannt. Die Druckschriften US 2007/0228256 A1 und US 2006/268137 A1 offenbaren Bildsensoren mit Zuordnungs-Spaltengruppen, die einander nicht derart überlagern, dass diese um wenigstens eine jeweilige Spalte zueinander versetzt sind.

Der Erfindung liegt die Aufgabe zugrunde, einen Bildsensor der eingangs genannten Art anzugeben, welcher ermöglicht, die Entstehung von vertikalen Streifen zu unterdrücken.

Die Aufgabe wird durch einen Bildsensor mit den Merkmalen des Anspruchs 1 gelöst, und insbesondere dadurch, dass der jeweiligen Spaltenleitung wenigstens ein weiterer Spaltenverstärker zugeordnet ist, der zugleich auch zumindest einer anderen Spaltenleitung zugeordnet ist, wobei eine Schalteinrichtung vorgesehen ist, um die jeweilige Spaltenleitung wahlweise auf einen der zugeordneten Spaltenverstärker zu schalten, und wobei eine Steuereinrichtung zum Steuern der Schalteinrichtung vorgesehen ist.

Erfindungsgemäß ist es also möglich, die einer Spalte bzw. einer Spaltenleitung zugeordneten Pixel auf einen von mehreren Spaltenverstärkern zu schalten. Die an der jeweiligen Spaltenleitung anliegenden Signale der der jeweiligen Spaltenleitung zugeordneten Pixel müssen daher nicht immer durch denselben Spaltenverstärker verstärkt werden. Die zu diesem Zweck mit einer jeweiligen Spaltenleitung verbindbaren Spaltenverstärker werden im Zusammenhang mit der Erfindung als "zugeordnete" Spaltenverstärker bezeichnet.

Hierdurch kann bei entsprechender Ansteuerung der Schalteinrichtung durch die Steuereinrichtung erreicht werden, dass die durch einen Spaltenverstärker verursachten Störungen im Bild nicht mehr entlang einer vertikalen Linie liegen, sondern auf mehrere Spalten des Bildes verteilt werden. Somit ist ein "Verwürfeln" oder "Verwischen" einer derartigen vertikalen Helligkeitsstörung möglich. Es ist sogar möglich, einen defekten Spaltenverstärker vollständig zu umgehen.

Sind wenigstens einige der Spaltenverstärker verschiedenen Spaltenleitungen zugeordnet, kann die Anzahl der insgesamt benötigten Spaltenverstärker gering gehalten werden. Daher ist es bevorzugt, wenn jeder der Spaltenverstärker mehreren Spaltenleitungen zugeordnet ist. In diesem Fall ergibt sich ein besonders einfacher Aufbau des Bildsensors. Die Anzahl der Spaltenverstärker entspricht der Anzahl der Spaltenleitungen. Ein vorteilhaft einfacher Aufbau des Bildsensors ist auch möglich, wenn jeder der Spaltenleitungen gleich viele Spaltenverstärker zugeordnet sind.

Um ein besonders wirkungsvolles "Verwürfeln" einer vertikalen Helligkeitsstörung zu ermöglichen, ist jeder Spaltenverstärker wenigstens vier, insbesondere wenigstens acht Spaltenleitungen zugeordnet.

Bevorzugt ist die Steuereinrichtung dazu ausgebildet, die Schalteinrichtung derart zu steuern, dass die Aufschaltzuordnung der Spaltenleitungen auf die Spaltenverstärker von Zeile zu Zeile variiert.

Die Spaltenleitungen des Bildsensors sind in mehrere so genannte Zuordnungs-Spaltengruppen untergliedert, wobei diejenigen Spaltenleitungen, denen derselbe Spaltenverstärker zugeordnet ist (oder denen dieselben Spaltenverstärker zugeordnet sind), eine jeweilige derartige Zuordnungs-Spaltengruppe bilden. Hinsichtlich einer derartigen Untergliederung des Sensors ist es bevorzugt, wenn wenigstens einige der Spaltenverstärker - insbesondere sämtliche Spaltenverstärker - den Spaltenleitungen mehrerer verschiedener Zuordnungs-Spaltengruppen zugeordnet sind. Mit anderen Worten kann jedem der Spaltenverstärker wenigstens eine Zuordnungs-Spaltengruppe zugeordnet sein, wobei eine jeweilige Zuordnungs-Spaltengruppe diejenigen Spaltenleitungen enthält, die wahlweise auf den jeweiligen Spaltenverstärker schaltbar sind, wobei mehrere Zuordnungs-Spaltengruppen vorgesehen sind, und wobei wenigstens einige der Spaltenleitungen mehreren verschiedenen Zuordnungs-Spaltengruppen angehören. Bevorzugt gehören mit Ausnahme von Spaltenleitungen der Randbereiche des Bildsensors sämtliche Spaltenleitungen mehreren verschiedenen Zuordnungs-Spaltengruppen an. Bei der genannten Ausführungsform sind die Zuordnungs-Spaltengruppen teilweise identisch, beispielsweise unterscheiden sie sich nur um jeweils eine Spaltenleitung. Diese Ausführungsform hat den Vorteil, dass eventuelle vertikale Helligkeitsstörungen, die durch einen der Spaltenverstärker verursacht werden, besonders wirksam in horizontaler Richtung "verwischt" werden, ohne dass für das Auge eine Gruppengrenze im Bild wahrnehmbar ist.

Die Zuordnungs-Spaltengruppen sind ineinander verschachtelt. Mit anderen Worten können mehrere Zuordnungs-Spaltengruppen vorgesehen sein, wobei wenigstens einige der Zuordnungs-Spaltengruppen einander überlappen. Hierdurch wird die Wahrnehmbarkeit von Gruppengrenzen zwischen verschiedenen Spaltengruppen besonders wirksam vermieden.

In elektronischen Kameras, die gleichzeitig eine hohe Anzahl von Pixeln und eine hohe Bildrate besitzen, werden Bildsensoren verwendet, die mehrere Signalausgänge mit einem jeweiligen Ausgangsverstärker aufweisen, welche parallel - und somit schneller - ausgelesen werden können. Die Spalten bzw. Spaltenleitungen können hierbei (alternativ oder zusätzlich zu den vorgenannten Zuordnungs-Spaltengruppen) in Auslese-Spaltengruppen eingeteilt sein, welche jeweils mehrere Spalten bzw. Spaltenleitungen aufweisen, wobei die Anzahl der Spalten bzw. Spaltenleitungen in einer jeden der Auslese-Spaltengruppen vorzugsweise der Anzahl der Signalausgänge entspricht. Innerhalb der jeweiligen ausgewählten Zeile des Bildsensors werden die Signale der jeweiligen zugeordneten Pixel über entsprechende Steuersignale dann spaltengruppenweise, d.h. Auslese-Spaltengruppe für Auslese-Spaltengruppe, auf die Ausgänge bzw. die Ausgangsverstärker des Bildsensors geschaltet. Die Anzahl der Spaltenleitungen einer jeden Auslese-Spaltengruppe entspricht hierbei vorzugsweise der Anzahl der Ausgangsverstärker, und jede Spaltenleitung gehört genau einer der Auslese-Spaltengruppen an.

Bevorzugt sind in diesem Fall wenigstens einige der Spaltenverstärker - vorzugsweise sämtliche der Spaltenverstärker - Spaltenleitungen verschiedener Auslese-Spaltengruppen zugeordnet. Ein Auftreten der durch einen Spaltenverstärker verursachten Störungen im Bild ist dann nicht notwendigerweise auf eine Auslese-Spaltengruppe beschränkt. Hierdurch kann die Wahrnehmbarkeit von Gruppengrenzen im Bild verhindert werden.

Gemäß einer vorteilhaften Weiterbildung besitzt jeder der der jeweiligen Spaltenleitung zugeordneten Spaltenverstärker eine Aufschaltwahrscheinlichkeit bezüglich der jeweiligen Spaltenleitung, wobei diese Aufschaltwahrscheinlichkeit einer relativen Häufigkeit entspricht, mit der die jeweilige Spaltenleitung - bezogen auf die verschiedenen Zeilen des Bildsensors - auf den betreffenden Spaltenverstärker geschaltet wird. Diese Aufschaltwahrscheinlichkeit kann für jeden Spaltenverstärker beispielsweise einmalig berechnet worden und dann in einer gespeicherten Nachschlagetabelle (look-up table) hinterlegt sein. Aufgrund einer derartigen vorbestimmten Aufschaltwahrscheinlichkeit kann sichergestellt werden, dass eine eventuelle vertikale Helligkeitsstörung hinreichend wirksam in horizontaler Richtung verwürfelt bzw. verwischt wird, insbesondere ohne wahrnehmbare Ränder.

Bevorzugt ist die Aufschaltwahrscheinlichkeit für wenigstens zwei der Spaltenverstärker unterschiedlich. Die Häufigkeit, mit der die jeweilige Spaltenleitung auf den jeweiligen zugeordneten Spaltenverstärker aufgeschaltet wird, ist daher nicht für alle der jeweiligen Spaltenleitung zugeordneten Spaltenverstärker gleich.

Darüber hinaus kann jeder der Spaltenleitungen ein bevorzugter Spaltenverstärker mit einer höchsten Aufschaltwahrscheinlichkeit zugeteilt sein. Die übrigen der der jeweiligen Spaltenleitung zugeordneten Spaltenverstärker besitzen dann eine jeweilige Aufschaltwahrscheinlichkeit, die kleiner ist als die höchste Aufschaltwahrscheinlichkeit.

Insbesondere ist die Steuereinrichtung dazu ausgebildet, die Schalteinrichtung derart zu steuern, dass die Aufschaltwahrscheinlichkeit der der jeweiligen Spaltenleitung zugeordneten Spaltenverstärker zu der jeweiligen Spaltenleitung umso kleiner ist, je weiter die betreffende Spaltenleitung von derjenigen Spaltenleitung entfernt ist, der der betreffende Spaltenverstärker als bevorzugter Spaltenverstärker (mit der höchsten Aufschaltwahrscheinlichkeit) zugeteilt ist. Hierdurch kann ein sanfter Übergang der durch einen Spaltenverstärker verursachten Störungen im Bild erreicht und ein abrupter Abfall der Störungen von einer Spalte im Bild zu der nächsten Spalte im Bild vermieden werden.

Beispielsweise kann hierzu die Aufschaltwahrscheinlichkeit der der jeweiligen Spaltenleitung zugeordneten Spaltenverstärker entlang der Zeilenrichtung des Bildsensors im Wesentlichen gaußverteilt sein, mit dem vorgenannten bevorzugten Spaltenverstärker als Bezugspunkt bzw. Zentrum. Insbesondere können für die Spaltenverstärker gaußverteilte Aufschaltwahrscheinlichkeiten derart vorgesehen sein, dass die Gaußverteilungen der verschiedenen Spaltenverstärker sich bezüglich der Spaltenleitungen überlappen, wobei die Gaußverteilungen vorzugsweise um jeweils eine Spalte zueinander versetzt sind.

Um die jeweilige Spaltenleitung wahlweise auf einen der zugeordneten Spaltenverstärker zu schalten, ist es bevorzugt, wenn die jeweilige Spaltenleitung mit jedem der zugeordneten Spaltenverstärker über einen eigenen Schalter verbindbar ist, wobei die mit einem jeweiligen Spaltenverstärker verbundenen Schalter eine Schaltergruppe bilden.

Nach einer Weiterbildung ist eine Spaltenauswahlschaltung vorgesehen, durch die wenigstens einige der Schalter gemeinsam schaltbar sind, wobei die gemeinsam schaltbaren Schalter höchstens einen Schalter einer jeden Schaltergruppe umfassen. Hierdurch können jeweilige Schalter der betreffenden Schaltergruppen bzw. Spaltenverstärker gemäß einem gemeinsamen Schaltschema einheitlich betätigt werden, wobei die Anzahl von Spaltenauswahlsteuerleitungen gering gehalten werden kann.

Die Erfindung betrifft weiterhin ein entsprechendes Verfahren zum Auslesen eines Bildsensors, insbesondere eines CMOS-Bildsensors, für elektronische Kameras.

Nicht beschränkende Ausführungsbeispiele der Erfindung sind in der Zeichnung dargestellt und werden nachfolgend beschrieben.
- Fig. 1: zeigt eine schematische Teilansicht eines ersten Ausführungsbeispiels eines Bildsensors.
- Fig. 2 und 3: zeigen Weiterbildungen hiervon.

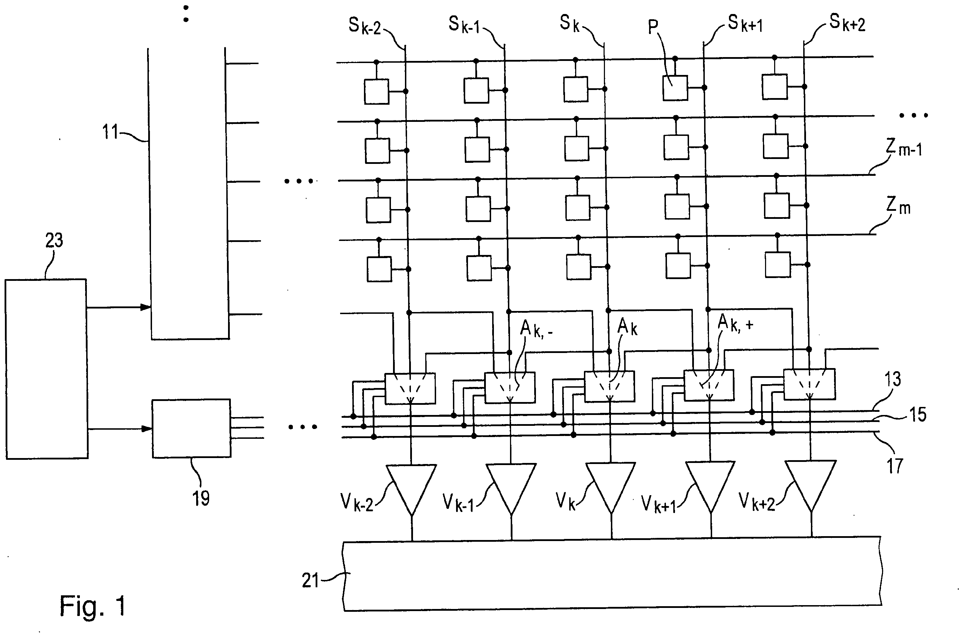

Der in Fig. 1 schematisch dargestellte Bildsensor weist eine Vielzahl von lichtempfindlichen Pixeln P auf, die in Zeilen (hier horizontal dargestellt) und Spalten (hier vertikal dargestellt) angeordnet sind. Der Übersichtlichkeit halber ist lediglich eines der Pixel P mit einem Bezugszeichen versehen. Jede Zeile besitzt eine Zeilenauswahlleitung Zₘ₋₁, Zₘ für die der jeweiligen Zeile zugeordneten Pixel P, und jede Spalte umfasst eine Spaltenleitung Sₖ₋₂, Sₖ₋₁, Sₖ, Sₖ₊₁, Sₖ₊₂ zum Auslesen der der jeweiligen Spalte zugeordneten Pixel P.

Der Bildsensor umfasst ferner eine Zeilenauswahlschaltung 11, durch die jeweils eine der Zeilen zum Auslesen der Signale der Pixel P dieser Zeile ausgewählt werden kann. Jeder Spaltenleitung Sₖ₋₂, Sₖ₋₁, Sₖ, Sₖ₊₁, Sₖ₊₂ ist ein so genannter bevorzugter Spaltenverstärker Vₖ₋₂, Vₖ₋₁, Vₖ, Vₖ₊₁, Vₖ₊₂ zugeordnet, um das an der jeweiligen Spaltenleitung Sₖ₋₂, Sₖ₋₁, Sₖ, Sₖ₊₁, Sk+2 anliegende Signal des Pixels P der jeweiligen ausgewählten Zeile zu verstärken. Beispielsweise ist der Spaltenleitung Sₖ der bevorzugte Spaltenverstärker Vₖ zugeordnet.

Darüber hinaus sind jeder Spaltenleitung Sₖ (hier und im Folgenden werden der Einfachheit halber nur noch das Bezugszeichen der Spaltenleitung Sₖ und die in Verbindung mit der Spaltenleitung Sₖ zu verwendenden Bezugszeichen angegeben) die beiden Spaltenverstärker Vₖ₋₁ und Vₖ₊₁ zugeordnet, bei denen es sich um die bevorzugten Spaltenverstärker der beiden benachbarten Spaltenleitungen Sₖ₋₁ und Sₖ₊₁ handelt. Mit anderen Worten kann die jeweilige Spaltenleitung Sₖ wahlweise auch auf den Spaltenverstärker Vₖ₋₁ oder den Spaltenverstärker Vₖ₊₁ geschaltet werden.

Es versteht sich, die vorstehend und auch noch nachstehend erläuterten Zuordnungen zwischen den Spaltenleitungen und den Spaltenverstärkern an den Randbereichen des Bildsensors nicht zwingend erforderlich sind. An den Randbereichen können insbesondere mehrere Spalten vorgesehen sein, deren Pixel kein Nutzsignal erzeugen. Allerdings ist es beispielsweise auch möglich, dass der ersten Spaltenleitung des Bildsensors (nicht gezeigt) neben dem eigenen bevorzugten Spaltenverstärker und dem bevorzugten Spaltenverstärker der zweiten Spaltenleitung der bevorzugte Spaltenverstärker der letzten Spaltenleitung (ebenfalls nicht gezeigt) zugeordnet ist. Der letzten Spaltenleitung des Bildsensors kann neben dem eigenen bevorzugten Spaltenverstärker und dem bevorzugten Spaltenverstärker der vorletzten Spaltenleitung der bevorzugte Spaltenverstärker der ersten Spaltenleitung zugeordnet sein. Alternativ kann für die erste Spaltenleitung und für die letzte Spaltenleitung ein jeweiliger weiterer Spaltenverstärker vorgesehen sein, der keiner der Spaltenleitungen als bevorzugter Spaltenverstärker zugeordnet ist.

Jede Spaltenleitung Sₖ ist wahlweise auf einen der zugeordneten Spaltenverstärker Vₖ₋₁, Vₖ, Vₖ₊₁ schaltbar, um das an der jeweiligen Spaltenleitung Sₖ anliegende Signal des Pixels P der jeweiligen ausgewählten Zeile zu verstärken. Hierzu sind jeder Spaltenleitung Sₖ drei Auswahlschalter Ak,-, Aₖ, A_{k,+} zugeordnet, um die jeweilige Spaltenleitung Sₖ wahlweise mit einem der drei Spaltenverstärker Vₖ₋₁, Vₖ, Vₖ₊₁ zu verbinden.

Die den Spaltenleitungen Sₖ zugeordneten Auswahlschalter Aₖ, die den jeweiligen eigenen bevorzugten Spaltenverstärker Vₖ mit der jeweiligen Spaltenleitung Sₖ verbinden können, sind über eine gemeinsame Spaltenauswahlleitung 15 von einer Spaltenauswahlschaltung 19 steuerbar. Die den Spaltenleitungen Sₖ zugeordneten Auswahlschalter A_{k,-} und A_{k,+}, die die jeweiligen bevorzugten Spaltenverstärker Vₖ₋₁ und Vₖ₊₁ der benachbarten Spaltenleitungen Sₖ₋₁ und Sₖ₊₁ mit der jeweiligen Spaltenleitung Sₖ verbinden können, sind über gemeinsame Spaltenauswahlleitungen 13, 17 von der Spaltenauswahlschaltung 19 steuerbar.

An die Spaltenverstärker Vₖ schließt sich ein Multiplexer 21 an, um die durch die Spaltenverstärker Vₖ verstärkten Signale zu nicht dargestellten Ausgängen des Bildsensors zu führen. Der Multiplexer 21 kann die Spaltenleitungen Sₖ auf einen einzigen Ausgangsverstärker oder auf mehrere Ausgangsverstärker schalten.

Die Zeilenauswahlschaltung 11, die Spaltenauswahlschaltung 19, die Spaltenauswahlleitungen 13, 15, 17 und die Auswahlschalter A_{k,-}, Aₖ, A_{k,+} sind Teil einer Schalteinrichtung des Bildsensors, die durch eine Steuereinrichtung 23 des Bildsensors, beispielsweise einen Mikrocontroller, gesteuert wird.

Nachfolgend wird das Auslesen des in Fig. 1 dargestellten erfindungsgemäßen Bildsensors beschrieben.

Das Auslesen erfolgt zeilenweise durch Anlegen entsprechender Adresssignale an die Zeilenauswahlschaltung 11, wobei die Zeilenauswahlleitungen Zₘ₋₁, Zₘ nacheinander beginnend bei einer ersten, an einem Rand des Bildsensors befindlichen Zeilenauswahlleitung in aufsteigender Reihenfolge adressiert werden.

Pro Zeile erfolgt das Auslesen spaltenweise oder - sofern die Spaltenleitungen Sₖ in Spaltengruppen unterteilt sind - spaltengruppenweise. Dabei werden entsprechend der Steuersignale auf den Spaltenauswahlleitungen 13, 15, 17 die jeweiligen Spaltenleitungen Sₖ wahlweise entweder auf die bevorzugten Spaltenverstärker Vₖ₋₁ der vorausgehenden Spaltenleitungen Sₖ₋₁ oder auf die eigenen bevorzugten Spaltenverstärker Vₖ oder auf die bevorzugten Spaltenverstärker Vₖ₊₁ der nachfolgenden Spaltenleitungen Sₖ₊₁ geschaltet, d.h. jede Spaltenleitunge Sₖ wird wahlweise auf einen der zugeordneten Spaltenverstärker Vₖ₋₁, Vₖ oder Vₖ₊₁ geschaltet.

Diese Aufschaltzuordnung der Spaltenleitungen Sₖ auf die Spaltenverstärker Vₖ₋₁, Vₖ, Vₖ₊₁ wird nun von Zeile zu Zeile variiert, damit die an der jeweiligen Spaltenleitung Sₖ anliegenden Signale der der jeweiligen Spaltenleitung Sₖ zugeordneten Pixel P nicht immer durch denselben Spaltenverstärker Vₖ verstärkt werden. Hierdurch kann die Wahrnehmbarkeit vertikaler Streifen in einem Bild, die eventuell durch einen der Spaltenverstärker verursacht werden, unterdrückt werden.

Die jeweilige Spaltenleitung Sₖ wird dabei jedem der drei zugeordneten Spaltenverstärker Vₖ₋₁, Vₖ, Vₖ₊₁ mit einer bestimmten Aufschaltwahrscheinlichkeit aufgeschaltet. Die höchste Aufschaltwahrscheinlichkeit besitzt - wie der Name bereits erkennen lässt - der bevorzugte Spaltenverstärker Vₖ. Die beiden Spaltenverstärker Vₖ₋₁ und Vₖ₊₁ besitzen eine geringere, aber vorzugsweise jeweils dieselbe Aufschaltwahrscheinlichkeit. Hierdurch ergibt sich - bezogen auf sämtliche Zeilen des Bildsensors - insgesamt ein zu den Seiten hin gleichmäßig auslaufendes "Verwürfeln" oder "Verwischen" eventueller Helligkeitsstörungen, die durch einen jeweiligen Spaltenverstärker verursacht werden. Die genannten Aufschaltwahrscheinlichkeiten werden dabei durch die Steuereinrichtung 23 vorgegeben.

Ein besonderer Vorteil der in Fig. 1 gezeigten Zuordnung zwischen den Spaltenleitungen Sₖ und den Spaltenverstärkern Vₖ besteht darin, dass jeder der Spaltenverstärker Vₖ mehreren, beiderseitig benachbarten Spaltenleitungen Sₖ zugeordnet ist. Somit erfolgt das erwünschte "Verwürfeln" eventueller Helligkeitsstörungen für jeden Spaltenverstärker Vₖ unabhängig von dessen Lage ohne wahrnehmbare Ränder.

Die in Fig. 1 gezeigte Verwendung von drei zugeordneten Spaltenverstärkern Vₖ₋₁, Vₖ, Vₖ₊₁ ist lediglich beispielhafter Natur. Grundsätzlich kann jede andere Anzahl - insbesondere ein deutlich größere Anzahl - an zugeordneten Spaltenverstärkern vorgesehen sein. Beispielsweise können einer jeweiligen Spaltenleitung neben dem bevorzugten Spaltenverstärker sechzehn weitere Spaltenverstärker zugeordnet sein (in einer symmetrischen Anordnung von +/- 8). Die Aufschaltwahrscheinlichkeit der zugeordneten Spaltenverstärker kann beispielsweise gaußverteilt um den bevorzugten Spaltenverstärker sein.

Darüber hinaus ist es auch nicht erforderlich, dass bei der Aufschaltzuordnung einer Zeile die jeweiligen Spaltenleitungen auf einander entsprechende zugeordnete Spaltenverstärker geschaltet werden. Beispielsweise ist es auch möglich, dass eine Spaltenleitung auf den eigenen bevorzugten Spaltenverstärker geschaltet wird, während innerhalb derselben Zeile eine andere Spaltenleitung auf den bevorzugten Spaltenverstärker der unmittelbar nachfolgenden Spaltenleitung geschaltet wird.

Schließlich ist zu der Fig. 1 noch anzumerken, dass im Rahmen der Erfindung für jede Spalte von Pixeln P auch mehrere - insbesondere zwei - Spaltenleitungen Sₖ vorgesehen sein können. Es ist auch möglich, dass mehrere - insbesondere zwei - Pixel P einer Zeile sich eine Spaltenleitung Sₖ teilen, d.h. dass für mehrere Spalten eine einzige Spaltenleitung Sₖ vorgesehen ist. Insbesondere ist es auch möglich, dass mehrere Zeilen des Bildsensors über mehrere Spaltenleitungen Sₖ parallel ausgelesen werden.

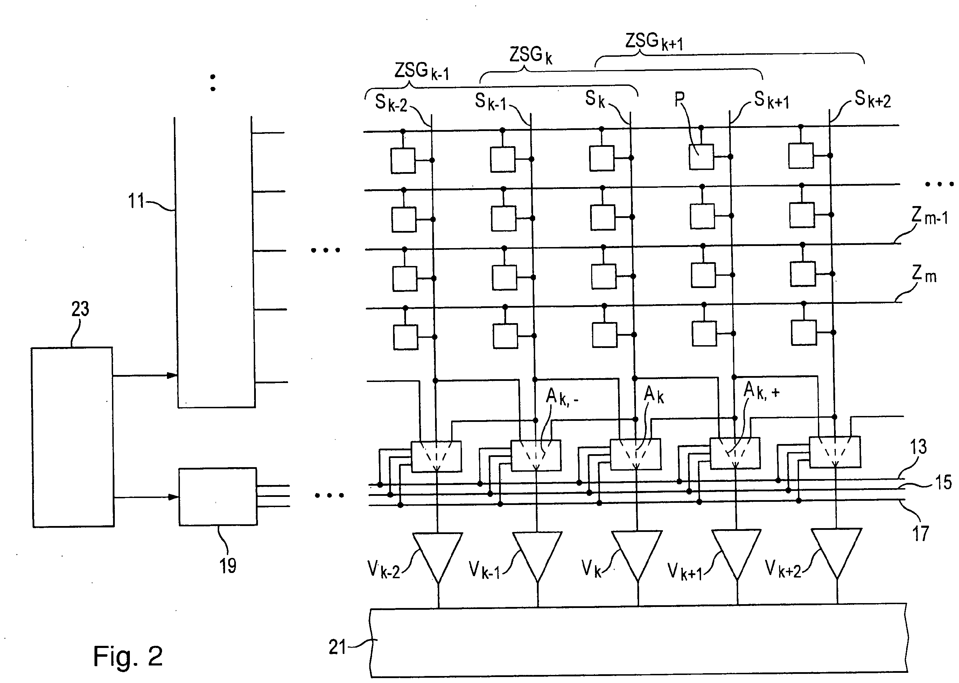

Fig. 2 entspricht der Darstellung gemäß Fig. 1. Allerdings ist hier eine Einteilung der Spaltenleitungen Sₖ₋₂, Sₖ₋₁, Sₖ, Sₖ₊₁, Sₖ₊₂ in so genannte Zuordnungs-Spaltengruppen ZSGₖ₋₁, ZSGₖ, ZSGₖ₊₁ vorgesehen. Diese Zuordnungs-Spaltengruppen definieren den Umfang, in dem eine Helligkeitsstörung eines jeweiligen Spaltenverstärkers Vₖ in horizontaler Richtung "verwischt" werden kann. Die Zuordnungs-Spaltengruppen ZSGₖ₋₁, ZSGₖ, ZSGₖ₊₁ entsprechen jedoch nicht notwendigerweise der vorgenannten Unterteilung für das Auslesen der Pixelsignale nach Spaltengruppen.

Jeweils drei unmittelbar benachbarte Spaltenleitungen Sₖ₋₁, Sₖ, Sₖ₊₁, denen derselbe Spaltenverstärker Vₖ zugeordnet ist (d.h. die auf denselben Spaltenverstärker Vₖ schaltbar sind), bilden eine jeweilige Zuordnungs-Spaltengruppe ZSGₖ. Die Anzahl der Zuordnungs-Spaltengruppen ZSGₖ₋₁, ZSGₖ, ZSGₖ₊₁ entspricht im Wesentlichen - nämlich abgesehen von Abweichungen, die aus den seitlichen Begrenzungen des Bildsensors resultieren - der Anzahl der Spaltenverstärker Vₖ₋₂, Vₖ₋₁, Vₖ, Vₖ₊₁, Vₖ₊₂.

Analog wie im Zusammenhang mit Fig. 1 erläutert, wird die Aufschaltzuordnung zwischen den Spaltenleitungen Sₖ₋₁, Sₖ, Sₖ₊₁ und den Spaltenverstärkern Vₖ₋₁, Vₖ, Vₖ₊₁ von Zeile zu Zeile variiert. Somit werden die an der jeweiligen Spaltenleitung Sₖ anliegenden Pixelsignale nicht immer durch denselben Spaltenverstärker Vₖ verstärkt bzw. der jeweilige Spaltenverstärker Vₖ verstärkt nicht immer die Pixelsignale derselben Spaltenleitung Sₖ.

Die Zuordnungs-Spaltengruppen ZSGₖ₋₁, ZSGₖ, ZSGₖ₊₁ sind ineinander verschachtelt, wobei zwei benachbarte Zuordnungs-Spaltengruppen ZSGₖ₋₁, ZSGₖ teilweise dieselben Spaltenleitungen Sₖ₋₁, Sₖ umfassen und sich nur hinsichtlich einer jeweiligen Spaltenleitung Sₖ₋₂ bzw. Sₖ₊₁ unterscheiden. Wie aus Fig. 2 ersichtlich ist, überlappen die Zuordnungs-Spaltengruppen ZSGₖ₋₁, ZSGₖ, ZSGₖ₊₁ also einander, wobei die einander überlappenden Zuordnungs-Spaltengruppen um eine jeweilige Spaltenleitung zueinander versetzt sind. Aus Fig. 2 ist ferner ersichtlich, dass jeder Spaltenverstärker Vₖ den Spaltenleitungen Sₖ₋₁, Sₖ, Sₖ₊₁ verschiedener Zuordnungs-Spaltengruppen ZSGₖ₋₁, ZSGₖ, ZSGₖ₊₁ zugeordnet ist. Hierdurch können eventuelle vertikale Helligkeitsstörungen, die durch einen der Spaltenverstärker Vₖ verursacht werden, besonders wirksam in horizontaler Richtung "verwischt" werden, ohne dass für das Auge eine Gruppengrenze im Bild wahrnehmbar ist. Durch die einander überlappende Anordnung der Zuordnungs-Spaltengruppen ZSGₖ₋₁, ZSGₖ, ZSGₖ₊₁ wird die Wahrnehmbarkeit von Gruppengrenzen also deutlich verringert.

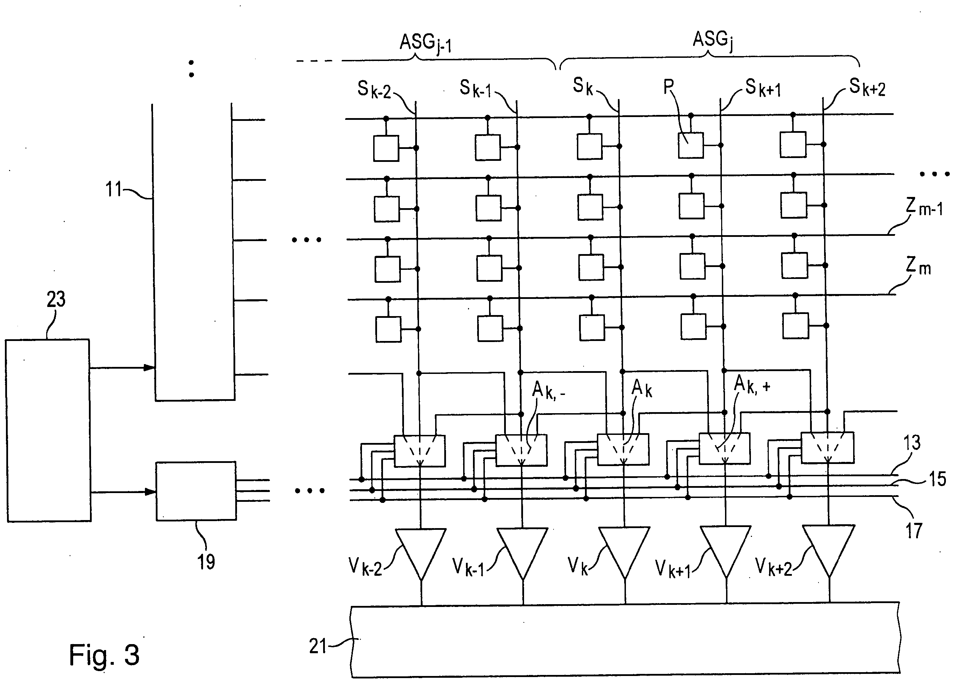

Auch bezogen auf das Auslesen des Bildsensors ist eine Einteilung der Spaltenleitungen Sₖ in Auslese-Spaltengruppen ASGⱼ möglich. Dies ist in Fig. 3 veranschaulicht, die wiederum der Darstellung gemäß Fig. 1 entspricht, wobei in Fig. 3 jedoch mehrere Auslese-Spaltengruppen ASGⱼ₋₁, ASGⱼ gekennzeichnet sind, von denen die Auslese-Spaltengruppe ASGⱼ₋₁ nur unvollständig dargestellt ist. Eine derartige Einteilung ist insbesondere dann sinnvoll, wenn der Bildsensor mehrere Ausgangsverstärker besitzt, auf die die Spaltenleitungen Sₖ parallel geschaltet werden sollen. In diesem Fall werden bezüglich einer jeden Zeile des Bildsensors die Spaltenleitungen Sₖ gruppenweise gemäß den Auslese-Spaltengruppen ASGj-i, ASGⱼ auf die Ausgangsverstärker geschaltet.

Wichtig ist, dass auch bei einer derartigen Einteilung der Spaltenleitungen Sₖ in Auslese-Spaltengruppen ASGⱼ wenigstens einige (Vₖ₋₁, Vₖ, Vₖ₊₂) der Spaltenverstärker Vₖ den Spaltenleitungen Sₖ mehrerer verschiedener Auslese-Spaltengruppen ASGⱼ₋₁, ASGⱼ zugeordnet sind. Auch trotz einer Einteilung der Spaltenleitungen Sₖ in Auslese-Spaltengruppen ASGⱼ, bei der die Spaltenleitungen Sₖ einer jeweiligen Auslese-Spaltengruppe ASGⱼ vorzugsweise unmittelbar benachbart zueinander angeordnet sind, können die Signale der Spaltenleitungen Sₖ der betreffenden Auslese-Spaltengruppe ASGⱼ somit auf einen Spaltenverstärker Vₖ₋₁ einer anderen Spaltengruppe ASGⱼ₋₁ geschaltet werden. Hierdurch wird wiederum eine unerwünschte Wahrnehmbarkeit von Gruppengrenzen verhindert.

Zu Fig. 3 ist noch anzumerken, dass die Spaltenleitungen Sₖ einer jeden Auslese-Spaltengruppe ASGⱼ gemäß einem vorbestimmten Schaltschema auf die zugeordneten Spaltenverstärker Vₖ geschaltet werden können, wobei das Schaltschema - abgesehen von den Randbereichen des Bildsensors - im Wesentlichen für sämtliche Auslese-Spaltengruppen ASGⱼ₋₁, ASGⱼ einer jeden Zeile des Bildsensors identisch ist und lediglich von Zeile zu Zeile variiert wird. Hierdurch ergibt sich ein besonders geringer Schaltungsaufwand.

### Bezugszeichenliste

- 11: Zeilenauswahlschaltung
- 13: Spaltenauswahlleitung
- 15: Spaltenauswahlleitung
- 17: Spaltenauswahlleitung
- 19: Spaltenauswahlschaltung
- 21: Multiplexer
- 23: Steuereinrichtung

- Aₖ: Auswahlschalter
- P: Pixel
- Sₖ: Spaltenleitung
- Vₖ: Spaltenverstärker
- Zₘ: Zeilenauswahlleitung
- ASGⱼ: Auslese-Spaltengruppe
- ZSGₖ: Zuordnungs-Spaltengruppe

## Patentansprüche

1. Bildsensor, insbesondere CMOS-Bildsensor, für elektronische Kameras, mit einer Vielzahl von in Zeilen und Spalten angeordneten lichtempfindlichen Pixeln (P), deren Signale über eine Vielzahl von Spaltenleitungen (Sₖ₋₂, Sₖ₋₁, Sₖ, Sₖ₊₁, Sₖ₊₂) zu Spaltenverstärkern (Vₖ₋₂, Vₖ₋₁, Vₖ, Vₖ₊₁, Vₖ₊₂) des Bildsensors geführt werden, wobei jeder Spaltenleitung (Sₖ) ein eigener erster Spaltenverstärker (Vₖ) zugeordnet ist, wobei die Anzahl der Spaltenverstärker (Vₖ₋₂, Vₖ₋₁, Vₖ, Vₖ₊₁, Vₖ₊₂) der Anzahl der Spaltenleitungen (Sₖ₋₂, Sₖ₋₁, Sₖ, Sₖ₊₁, Sₖ₊₂) entspricht,
wobei der jeweiligen Spaltenleitung (Sₖ) wenigstens ein weiterer Spaltenverstärker (Vₖ₋₁, Vₖ₊₁) zugeordnet ist, der zugleich auch zumindest einer anderen Spaltenleitung (Sₖ₋₂, Sₖ₋₁; Sₖ₊₁, Sₖ₊₂) zugeordnet ist, wobei eine Schalteinrichtung (11, 13, 15, 17, 19) des Bildsensors vorgesehen ist, um die jeweilige Spaltenleitung (Sₖ) wahlweise auf einen der ihr zugeordneten Spaltenverstärker (Vₖ₋₁, Vₖ, Vₖ₊₁) zu schalten, und wobei eine Steuereinrichtung (23) des Bildsensors zum Steuern der Schalteinrichtung (11, 13, 15, 17, 19) vorgesehen ist,
wobei diejenigen Spaltenleitungen (Sₖ₋₁, Sₖ, Sₖ₊₁), denen derselbe Spaltenverstärker (Vₖ) zugeordnet ist, eine jeweilige Zuordnungs-Spaltengruppe (ZSGₖ) bilden, wobei mehrere Zuordnungs-Spaltengruppen (ZSGₖ₋₁, ZSGₖ, ZSGₖ₊₁) vorgesehen sind,
wobei die Spaltenleitungen (Sₖ₋₁, Sₖ, Sₖ₊₁) einer jeden Zuordnungs-Spaltengruppe (ZSGₖ) unmittelbar benachbart zueinander angeordnet sind, und
wobei wenigstens einige der Zuordnungs-Spaltengruppen (ZSGₖ₋₁, ZSGₖ, ZSGₖ₊₁) einander überlappen, wobei die einander überlappenden Zuordnungs-Spaltengruppen (ZSGₖ₋₁, ZSGₖ, ZSGₖ₊₁) um wenigstens eine jeweilige Spalte zueinander versetzt sind, **dadurch gekennzeichnet,**
**dass** jedem Spaltenverstärker (Vₖ) wenigstens vier Spaltenleitungen (Sₖ₋₂, Sₖ₋₁, Sₖ, Sₖ₊₁, Sₖ₊₂) zugeordnet sind.

2. Bildsensor nach Anspruch 1,
**dadurch gekennzeichnet,**
**dass** die Steuereinrichtung (23) dazu ausgebildet ist, die Schalteinrichtung (11, 13, 15, 17, 19) derart zu steuern, dass die Aufschaltzuordnung der Spaltenleitungen (Sₖ₋₂, Sₖ₋₁, Sₖ, Sₖ₊₁, Sₖ₊₂) auf die Spaltenverstärker (Vₖ₋₂, Vₖ₋₁, Vₖ, Vₖ₊₁, Vₖ₊₂) von Zeile zu Zeile variiert.

3. Bildsensor nach einem der vorstehenden Ansprüche,
**dadurch gekennzeichnet,**
**dass** die Anzahl der Spaltenverstärker (Vₖ₋₁, Vₖ, Vₖ₊₁), die einer jeweiligen Spaltenleitung (Sₖ) zugeordnet sind, der Anzahl von Spaltenleitungen (Sₖ₋₁, Sₖ, Sₖ₊₁) entspricht, denen ein jeder Spaltenverstärker (Vₖ) zugeordnet ist.

4. Bildsensor nach einem der vorstehenden Ansprüche,
**dadurch gekennzeichnet,**
**dass** wenigstens einige der Spaltenverstärker (Vₖ) Spaltenleitungen (Sₖ₋₁, Sₖ, Sₖ₊₁) verschiedener Zuordnungs-Spaltengruppen (ZSGₖ₋₁, ZSGₖ, ZSGₖ₊₁) zugeordnet sind.

5. Bildsensor nach einem der vorstehenden Ansprüche,
**dadurch gekennzeichnet,**
**dass** die einander überlappenden Zuordnungs-Spaltengruppen (ZSGₖ₋₁, ZSGₖ, ZSGₖ₊₁) um eine jeweilige Spalte zueinander versetzt sind.

6. Bildsensor nach einem der vorstehenden Ansprüche,
**dadurch gekennzeichnet,**
**dass** die Anzahl der Zuordnungs-Spaltengruppen (ZSGₖ₋₁, ZSGₖ, ZSGₖ₊₁) im Wesentlichen der Anzahl der Spaltenverstärker (Vₖ₋₂, Vₖ₋₁, Vₖ, Vₖ₊₁, Vₖ₊₂) entspricht.

7. Bildsensor nach einem der vorstehenden Ansprüche,
**dadurch gekennzeichnet,**
**dass** der Bildsensor mehrere Ausgangsverstärker aufweist, wobei die Spaltenleitungen (Sₖ₋₂, Sₖ₋₁, Sₖ, Sₖ₊₁, Sₖ₊₂) dergestalt in mehrere Auslese-Spaltengruppen (ASGⱼ₋₁, ASGⱼ, ASGⱼ₊₁) unterteilt sind, dass innerhalb der jeweiligen ausgewählten Zeile des Bildsensors die Spaltenleitungen (Sₖ₋₂, Sₖ₋₁, Sₖ, Sₖ₊₁, Sₖ₊₂) über eine sich an die Spaltenverstärker (Vₖ₋₁, Vₖ, Vₖ₊₁) anschließende Multiplexereinrichtung (21) gruppenweise gemäß den Auslese-Spaltengruppen (ASGⱼ₋₁, ASGⱼ) auf die Ausgangsverstärker geschaltet werden, wobei wenigstens einige der Spaltenverstärker (Vₖ) Spaltenleitungen (Sₖ₋₁, Sₖ, Sₖ₊₁) verschiedener Auslese-Spaltengruppen (ASGⱼ₋₁, ASGⱼ) zugeordnet sind.

8. Bildsensor nach Anspruch 7,
**dadurch gekennzeichnet,**
**dass** die Steuereinrichtung (23) dazu ausgebildet ist, die Schalteinrichtung (11, 13, 15, 17, 19) derart zu steuern, dass die Spaltenleitungen (Sₖ, Sₖ₊₁, Sₖ₊₂) einer jeden Auslese-Spaltengruppe (ASGⱼ) gemäß einem Schaltschema auf die zugeordneten Spaltenverstärker (Vₖ₋₁, Vₖ, Vₖ₊₁, Vₖ₊₂) geschaltet werden, wobei das Schaltschema im Wesentlichen für sämtliche Auslese-Spaltengruppen (ASGⱼ₋₁, ASGⱼ) einer jeden Zeile des Bildsensors identisch ist.

9. Bildsensor nach einem der vorstehenden Ansprüche,
**dadurch gekennzeichnet,**
**dass** jeder der der jeweiligen Spaltenleitung (Sₖ) zugeordneten Spaltenverstärker (Vₖ₋₁, Vₖ, Vₖ₊₁) eine Aufschaltwahrscheinlichkeit bezüglich der jeweiligen Spaltenleitung (Sₖ) besitzt, die einer relativen Häufigkeit bezüglich der der jeweiligen Spaltenleitung (Sₖ) zugeordneten Spaltenverstärker (Vₖ₋₁, Vₖ, Vₖ₊₁) entspricht, mit der die jeweilige Spaltenleitung (Sₖ) auf den betreffenden Spaltenverstärker (Vₖ₋₁, Vₖ, Vₖ₊₁) aufgeschaltet wird.

10. Bildsensor nach Anspruch 9,
**dadurch gekennzeichnet,**
**dass** die Steuereinrichtung (23) dazu ausgebildet ist, die Schalteinrichtung (11, 13, 15, 17, 19) derart zu steuern, dass die Aufschaltwahrscheinlichkeit für wenigstens zwei der Spaltenverstärker (Vₖ₋₁, Vₖ; Vₖ, Vₖ₊₁) unterschiedlich ist.

11. Bildsensor nach Anspruch 9 oder 10,
**dadurch gekennzeichnet,**
**dass** jeder der Spaltenleitungen (Sₖ) ein bevorzugter Spaltenverstärker (Vₖ) mit einer höchsten Aufschaltwahrscheinlichkeit zugeteilt ist,
wobei die übrigen der der jeweiligen Spaltenleitung (Sₖ) zugeordneten Spaltenverstärker (Vₖ₋₁, Vₖ₊₁) eine jeweilige Aufschaltwahrscheinlichkeit besitzen, die kleiner ist als die höchste Aufschaltwahrscheinlichkeit.

12. Bildsensor nach Anspruch 11,
**dadurch gekennzeichnet,**
**dass** die Steuereinrichtung (23) dazu ausgebildet ist, die Schalteinrichtung (11, 13, 15, 17, 19) derart zu steuern, dass die Aufschaltwahrscheinlichkeit der zugeordneten Spaltenverstärker (Vₖ₋₁, Vₖ₊₁) bezüglich einer jeweiligen Spaltenleitung (Sₖ) umso kleiner ist, je weiter die betreffende Spaltenleitung (Sₖ) von derjenigen Spaltenleitung (Sₖ₋₁, Sₖ₊₁) entfernt ist, der der betreffende Spaltenverstärker (Vₖ₋₁, Vₖ₊₁) als bevorzugter Spaltenverstärker zugeteilt ist, und/oder
**dass** die Aufschaltwahrscheinlichkeit der der jeweiligen Spaltenleitung (Sₖ) zugeordneten Spaltenverstärker (Vₖ₋₁, Vₖ, Vₖ₊₁) entlang der Zeilenrichtung des Bildsensors bezüglich des bevorzugten Spaltenverstärkers (Vₖ) gaußverteilt ist.

13. Bildsensor nach einem der vorstehenden Ansprüche,
**dadurch gekennzeichnet,**
**dass** die jeweilige Spaltenleitung (Sₖ) mit jedem der zugeordneten Spaltenverstärker (Vₖ₋₁, Vₖ, Vₖ₊₁) über einen eigenen Schalter (A_{k,-}, Aₖ, A_{k,+}) verbindbar ist, wobei die mit einem jeweiligen Spaltenverstärker (Vₖ₋₁, Vₖ, Vₖ₊₁) verbundenen Schalter eine Schaltergruppe bilden,
wobei vorzugsweise eine Spaltenauswahlschaltung (19) vorgesehen ist, durch die wenigstens einige der Schalter (A_{k,-}; Aₖ; A_{k,+}) gemeinsam schaltbar sind, wobei die gemeinsam schaltbaren Schalter (A_{k,-}; Aₖ; A_{k,+}) höchstens einen Schalter (A_{k,-}; Aₖ; A_{k,+}) einer jeden Schaltergruppe umfassen.

14. Verfahren zum Auslesen eines Bildsensors, insbesondere eines CMOS-Bildsensors, für elektronische Kameras, wobei der Bildsensor eine Vielzahl von in Zeilen und Spalten angeordneten lichtempfindlichen Pixeln (P) umfasst, deren Signale über eine Vielzahl von Spaltenleitungen (Sₖ₋₂, Sₖ₋₁, Sₖ, Sₖ₊₁, Sₖ₊₂) zu Spaltenverstärkern (Vₖ₋₂, Vₖ₋₁, Vₖ, Vₖ₊₁, Vₖ₊₂) des Bildsensors geführt werden, wobei jeder Spaltenleitung (Sₖ) ein eigener erster Spaltenverstärker (Vₖ) zugeordnet ist, wobei die Anzahl der Spaltenverstärker (Vₖ₋₂, Vₖ₋₁, Vₖ, Vₖ₊₁, Vₖ₊₂) der Anzahl der Spaltenleitungen (Sₖ₋₂, Sₖ₋₁, Sₖ, Sₖ₊₁, Sₖ₊₂) entspricht,
wobei der jeweiligen Spaltenleitung (Sₖ) wenigstens ein weiterer Spaltenverstärker (Vₖ₋₁, Vₖ₊₁) zugeordnet ist, der zugleich auch zumindest einer anderen Spaltenleitung (Sₖ₋₂, Sₖ₋₁; Sₖ₊₁, Sₖ₊₂) zugeordnet ist, wobei die jeweilige Spaltenleitung (Sₖ) wahlweise auf einen der ihr zugeordneten Spaltenverstärker (Vₖ₋₁, Vₖ, Vₖ₊₁) geschaltet wird,
wobei diejenigen Spaltenleitungen (Sₖ₋₁, Sₖ, Sₖ₊₁), denen derselbe Spaltenverstärker (Vₖ) zugeordnet ist, eine jeweilige Zuordnungs-Spaltengruppe (ZSGₖ) bilden, wobei mehrere Zuordnungs-Spaltengruppen (ZSGₖ₋₁, ZSGₖ, ZSGₖ₊₁) vorgesehen sind,
wobei die Spaltenleitungen (Sₖ₋₁, Sₖ, Sₖ₊₁) einer jeden Zuordnungs-Spaltengruppe (ZSGₖ) unmittelbar benachbart zueinander angeordnet sind,
und
wobei wenigstens einige der Zuordnungs-Spaltengruppen (ZSGₖ₋₁, ZSGₖ, ZSGₖ₊₁) einander überlappen, wobei die einander überlappenden Zuordnungs-Spaltengruppen (ZSGₖ₋₁, ZSGₖ, ZSGₖ₊₁) um wenigstens eine jeweilige Spalte zueinander versetzt sind,
**dadurch gekennzeichnet,**
**dass** jedem Spaltenverstärker (Vₖ) wenigstens vier Spaltenleitungen (Sₖ₋₂, Sₖ₋₁, Sₖ, Sₖ₊₁, Sₖ₊₂) zugeordnet sind.

## Claims

1. An image sensor, in particular a CMOS image sensor, for electronic cameras having a plurality of light-sensitive pixels (P) which are arranged in rows and columns and whose signals are conducted via a plurality of column lines (Sₖ₋₂, Sₖ₋₁, Sₖ, Sₖ₊₁, Sₖ₊₂) to column amplifiers (Vₖ₋₂, Vₖ₋₁, Vₖ, Vₖ₊₁, Vₖ₊₂) of the image sensor, wherein a separate first column amplifier (Vₖ) is associated with each column line (Sₖ), with the number of column amplifiers (Vₖ₋₂, Vₖ₋₁, Vₖ, Vₖ₊₁, Vₖ₊₂) corresponding to the number of column lines (Sₖ₋₂, Sₖ₋₁, Sₖ, Sₖ₊₁, Sₖ₊₂);
wherein at least one further column amplifier (Vₖ₋₁, Vₖ₊₁) is associated with the respective column line (Sₖ) and is simultaneously also associated with at least one other column line (Sₖ₋₂, Sₖ₋₁; Sₖ₊₁, Sₖ₊₂), with a switching device (11, 13, 15, 17, 19) of the image sensor being provided to selectively switch the respective column line (Sₖ) to one of the column amplifiers (Vₖ₋₁, Vₖ, Vₖ₊₁) associated with it, and with a control device (23) of the image sensor being provided for the control of the switching device (11, 13, 15, 17, 19);
wherein those column lines (Sₖ₋₁, Sₖ, Sₖ₊₁) with which the same column amplifier (Vₖ) is associated form a respective association column group (ZSGₖ), with a plurality of association column groups (ZSGₖ₋₁, ZSGₖ, ZSGₖ₊₁) being provided;
wherein the column lines (Sₖ₋₁, Sₖ, Sₖ₊₁) of each association column group (ZSGₖ) are arranged directly adjacent to one another; and
wherein at least some of the association column groups (ZSGₖ₋₁, ZSGₖ, ZSGₖ₊₁) mutually overlap, with the mutually overlapping association column groups (ZSGₖ₋₁, ZSGₖ, ZSGₖ₊₁) being mutually offset by at least one respective column,
**characterized in that**
at least four column lines (Sₖ₋₂, Sₖ₋₁, Sₖ, Sₖ₊₁, Sₖ₊₂) are associated with each column amplifier (Vₖ).

2. An image sensor in accordance with claim 1,
**characterized in that**
the control device (23) is configured to control the switching device (11, 13, 15, 17, 19) such that the connection association of the column lines (Sₖ₋₂, Sₖ₋₁, Sₖ, Sₖ₊₁, Sₖ₊₂) to the column amplifiers (Vₖ₋₂, Vₖ₋₁, Vₖ, Vₖ₊₁, Vₖ₊₂) varies from row to row.

3. An image sensor in accordance with one of the preceding claims,
**characterized in that**
the number of column amplifiers (Vₖ₋₁, Vₖ, Vₖ₊₁) which are associated with a respective column line (Sₖ) corresponds to the number of column lines (Sₖ₋₁, Sₖ, Sₖ₊₁) with which each column amplifier (Vₖ) is associated.

4. An image sensor in accordance with any one of the preceding claims,
**characterized in that**
at least some of the column amplifiers (Vₖ) are associated with column lines (Sₖ₋₁, Sₖ, Sₖ₊₁) of different association column groups (ZSGₖ₋₁, ZSGₖ, ZSGₖ₊₁).

5. An image sensor in accordance with any one of the preceding claims,
**characterized in that**
the mutually overlapping association column groups (ZSGₖ₋₁, ZSGₖ, ZSGₖ₊₁) are mutually offset by a respective column.

6. An image sensor in accordance with any one of the preceding claims,
**characterized in that**
the number of association column groups (ZSGₖ₋₁, ZSGₖ, ZSGₖ₊₁) substantially corresponds to the number of column amplifiers (Vₖ₋₂, Vₖ₋₁, Vₖ, Vₖ₊₁, Vₖ₊₂).

7. An image sensor in accordance with any one of the preceding claims,
**characterized in that**
the image sensor has a plurality of output amplifiers, with the column lines (Sₖ₋₂, Sₖ₋₁, Sₖ, Sₖ₊₁, Sₖ₊₂) being divided into a plurality of readout column groups (ASGⱼ₋₁, ASGⱼ, ASGⱼ₊₁) such that, within the respective selected row of the image sensor, the column lines (Sₖ₋₂, Sₖ₋₁, Sₖ, Sₖ₊₁, Sₖ₊₂) are switched group-wise in accordance with the readout column groups (ASGⱼ₋₁, ASGⱼ, ASGⱼ₊₁) to the output amplifiers via a multiplexer device (21) which connects to the column amplifiers (Vₖ₋₁, Vₖ, Vₖ₊₁), with at least some of the column amplifiers (Vₖ) being associated with column lines (Sₖ₋₁, Sₖ, Sₖ₊₁) of different readout column groups (ASGⱼ₋₁, ASGⱼ).

8. An image sensor in accordance with claim 7,
**characterized in that**
the control device (23) is configured to control the switching device (11, 13, 15, 17, 19) such that the column lines (Sₖ, Sₖ₊₁, Sₖ₊₂) of each readout column group (ASGⱼ) are switched to the associated column amplifiers (Vₖ₋₁, Vₖ, Vₖ₊₁, Vₖ₊₂) in accordance with a switching scheme, with the switching scheme being substantially identical for all the readout column groups (ASGⱼ₋₁, ASGⱼ) of each row of the image sensor.

9. An image sensor in accordance with any one of the preceding claims,
**characterized in that**
each of the column amplifiers (Vₖ₋₁, Vₖ, Vₖ₊₁) associated with the respective column line (Sₖ) has a connection probability with respect to the respective column line (Sₖ) which corresponds to a relative frequency with respect to the column amplifiers (Vₖ₋₁, Vₖ, Vₖ₊₁) associated with the respective column line (Sₖ) at which the respective column line (Sₖ) is switched to the respective column amplifier (Vₖ₋₁, Vₖ, Vₖ₊₁).

10. An image sensor in accordance with claim 9,
**characterized in that**
the control device (23) is configured to control the switching device (11, 13, 15, 17, 19) such that the connection probability is different for at least two of the column amplifiers (Vₖ₋₁, Vₖ; Vₖ, Vₖ₊₁).

11. An image sensor in accordance with claim 9 or claim 10,
**characterized in that**
a preferred column amplifier (Vₖ) having a highest connection probability is assigned to each of the column lines (Sₖ), with the remainder of the column amplifiers (Vₖ₋₁, Vₖ₊₁) associated with the respective column line (Sₖ) having a respective connection probability which is smaller than the highest connection probability.

12. An image sensor in accordance with claim 11,
**characterized in that**
the control device (23) is configured to control the switching device (11, 13, 15, 17, 19) such that the connection probability of the associated column amplifiers (Vₖ₋₁, Vₖ₊₁) is the smaller with respect to a respective column line (Sₖ) the further the respective column line (Sₖ) is removed from that column line (Sₖ₋₁, Sₖ₊₁) to which the respective column amplifier (Vₖ₋₁, Vₖ₊₁) is assigned as the preferred column amplifier;
and/or
**in that** the connection probability of the column amplifiers (Vₖ₋₁, Vₖ, Vₖ₊₁) associated with the respective column line (Sₖ) has a Gaussian distribution with respect to the preferred column amplifier (Vₖ) along the row direction of the image sensor.

13. An image sensor in accordance with any one of the preceding claims,
**characterized in that**
the respective column line (Sₖ) can be connected to each of the associated column amplifiers (Vₖ₋₁, Vₖ, Vₖ₊₁) via a separate switch (A_{k,-}, Aₖ, A_{k,+}), with the switches connected to a respective column amplifier (Vₖ₋₁, Vₖ, Vₖ₊₁) forming a switch group, and
with a column selection circuit (19) preferably being provided by which at least some of the switches (A_{k,-}; Aₖ; A_{k,+}) can be jointly switched, with the jointly switchable switches (A_{k,-}; Aₖ; A_{k,+}) comprising at most one switch (A_{k,-}; Aₖ; A_{k,+}) of each switch group.

14. A method for the reading out of an image sensor, in particular of a CMOS image sensor, for electronic cameras, wherein the image sensor comprises a plurality of light-sensitive pixels (P) which are arranged in rows and columns and whose signals are conducted via a plurality of column lines (Sₖ₋₂, Sₖ-₁, Sₖ, Sₖ₊₁, Sₖ₊₂) to column amplifiers (Vₖ₋₂, Vₖ₋₁, Vₖ, Vₖ₊₁, Vₖ₊₂) of the image sensor, with a separate first column amplifier (Vₖ) being associated with each column line (Sₖ), and with the number of column amplifiers (Vₖ₋₂, Vₖ₋₁, Vₖ, Vₖ₊₁, Vₖ₊₂) corresponding to the number of column lines (Sₖ₋₂, Sₖ₋₁, Sₖ, Sₖ₊₁, Sₖ₊₂);
wherein at least one further column amplifier (Vₖ₋₁, Vₖ₊₁) is associated with the respective column line (Sₖ) and is simultaneously also associated with at least one other column line (Sₖ₋₂, Sₖ₋₁; Sₖ₊₁, Sₖ₊₂), with the respective column line (Sₖ) being selectively switched to one of the column amplifiers (Vₖ₋₁, Vₖ, Vₖ₊₁) associated with it;
wherein those column lines (Sₖ₋₁, Sₖ, Sₖ₊₁) with which the same column amplifier (Vₖ) is associated form a respective association column group (ZSGₖ), with a plurality of association column groups (ZSGₖ₋₁, ZSGₖ, ZSGₖ₊₁) being provided;
wherein the column lines (Sₖ₋₁, Sₖ, Sₖ₊₁) of each association column group (ZSGₖ) are arranged directly adjacent to one another;
and
wherein at least some of the association column groups (ZSGₖ₋₁, ZSGₖ, ZSGₖ₊₁) mutually overlap, with the mutually overlapping association column groups (ZSGₖ₋₁, ZSGₖ, ZSGₖ₊₁) being mutually offset by at least one respective column,
**characterized in that**
at least four column lines (Sₖ₋₂, Sₖ₋₁, Sₖ, Sₖ₊₁, Sₖ₊₂) are associated with each column amplifier (Vₖ).

## Revendications

1. Capteur d'images, en particulier capteur d'images CMOS, pour des caméras électroniques, comportant
une multitude de pixels photosensibles (P) disposés en lignes et en colonnes, dont les signaux sont amenés à des amplificateurs de colonne (Vₖ₋₂, Vₖ₋₁, Vₖ, Vₖ₊₁, Vₖ₊₂) du capteur d'images via une multitude de fils de colonne (Sₖ₋₂, Sₖ₋₁, Sₖ, Sₖ₊₁, Sₖ₊₂), un propre premier amplificateur de colonne (Vₖ) étant associé à chaque fil de colonne (Sₖ), le nombre d'amplificateurs de colonne (Vₖ₋₂, Vₖ₋₁, Vₖ, Vₖ₊₁, Vₖ₊₂) correspondant au nombre de fils de colonne (Sₖ₋₂, Sₖ₋₁, Sₖ, Sₖ₊₁, Sₖ₊₂),
dans lequel
au moins un autre amplificateur de colonne (Vₖ₋₁, Vₖ₊₁) est associé au fil de colonne respectif (Sₖ), qui est associé en même temps également à au moins un autre fil de colonne (Sₖ₋₂, Sₖ₋₁ ; Sₖ₊₁, Sₖ₊₂),
il est prévu un moyen de commutation (11, 13, 15, 17, 19) du capteur d'images, pour commuter au choix le fil de colonne respectif (Sₖ) sur l'un des amplificateurs de colonne (Vₖ₋₁, Vₖ, Vₖ₊₁) qui lui sont associés,
et il est prévu un moyen de commande (23) du capteur d'images pour commander le moyen de commutation (11, 13, 15, 17, 19),
ceux des fils de colonne (Sₖ₋₁, Sₖ, Sₖ₊₁) auxquels est associé le même amplificateur de colonne (Vₖ) constituent un groupe de colonnes d'association (ZSGₖ) respectif,
il est prévu plusieurs groupes de colonnes d'association (ZSGₖ₋₁, ZSGₖ, ZSGₖ₊₁),
les fils de colonne (Sₖ₋₁, Sₖ, Sₖ₊₁) de chaque groupe de colonnes d'association (ZSGₖ) sont disposés directement au voisinage les uns des autres, et quelques-uns au moins des groupes de colonnes d'association (ZSGₖ₋₁, ZSGₖ, ZSGₖ₊₁) se chevauchent, les groupes de colonnes d'association (ZSGₖ₋₁, ZSGₖ, ZSGₖ₊₁) en chevauchement étant décalés les uns des autres à titre d'au moins une colonne respective,
**caractérisé en ce que**
au moins quatre fils de colonne (Sₖ₋₂, Sₖ₋₁, Sₖ, Sₖ₊₁, Sₖ₊₂) sont associés à chaque amplificateur de colonne (Vₖ).

2. Capteur d'images selon la revendication 1,
**caractérisé en ce que**
le moyen de commande (23) est réalisé pour commander le moyen de commutation (11, 13, 15, 17, 19) de telle sorte que l'association de commutation des fils de colonne (Sₖ₋₂, Sₖ₋₁, Sₖ, Sₖ₊₁, Sₖ₊₂) sur les amplificateurs de colonne (Vₖ₋₂, Vₖ₋₁, Vₖ, Vₖ₊₁, Vₖ₊₂) varie d'une ligne à l'autre.

3. Capteur d'images selon l'une des revendications précédentes,
**caractérisé en ce que**
le nombre des amplificateurs de colonne (Vₖ₋₁, Vₖ, Vₖ₊₁) associés à un fil de colonne respectif (Sₖ) correspond au nombre des fils de colonne (Sₖ₋₁, Sₖ, Sₖ₊₁) auxquels chaque amplificateur de colonne (Vₖ) est associé.

4. Capteur d'images selon l'une des revendications précédentes,
**caractérisé en ce que**
quelques-uns au moins des amplificateurs de colonne (Vₖ) sont associés à des fils de colonne (Sₖ₋₁, Sₖ, Sₖ₊₁) de différents groupes de colonnes d'association (ZSGₖ₋₁, ZSGₖ, ZSGₖ₊₁).

5. Capteur d'images selon l'une des revendications précédentes,
**caractérisé en ce que**
les groupes de colonnes d'association (ZSGₖ₋₁, ZSGₖ, ZSGₖ₊₁) en chevauchement sont décalés les uns des autres à titre d'une colonne respective.

6. Capteur d'images selon l'une des revendications précédentes,
**caractérisé en ce que**
le nombre des groupes de colonnes d'association (ZSGₖ₋₁, ZSGₖ, ZSGₖ₊₁) correspond sensiblement au nombre des amplificateurs de colonne (Vₖ₋₂, Vₖ₋₁, Vₖ, Vₖ₊₁, Vₖ₊₂).

7. Capteur d'images selon l'une des revendications précédentes,
**caractérisé en ce que**
le capteur d'images comprend plusieurs amplificateurs de sortie, les fils de colonne (Sₖ₋₂, Sₖ₋₁, Sₖ, Sₖ₊₁, Sₖ₊₂) étant subdivisés en plusieurs groupes de colonnes de lecture (ASGⱼ₋₁, ASGⱼ, ASGⱼ₊₁) de telle sorte qu'à l'intérieur de la ligne choisie respective du capteur d'images, les fils de colonne (Sₖ₋₂, Sₖ₋₁, Sₖ, Sₖ₊₁, Sₖ₊₂) sont commutés sur les amplificateurs de sortie par groupe selon les groupes de colonnes de lecture (ASGⱼ₋₁, ASGⱼ, ASGⱼ₊₁) via un moyen multiplexeur (21) qui se raccorde aux amplificateurs de colonne (Vₖ₋₁, Vₖ, Vₖ₊₁), quelques-uns au moins des amplificateurs de colonne (Vₖ) étant associés à des fils de colonne (Sₖ₋₁, Sₖ, Sₖ₊₁) de différents groupes de colonnes de lecture (ASGⱼ₋₁, ASGⱼ).

8. Capteur d'images selon la revendication 7,
**caractérisé en ce que**
le moyen de commande (23) est réalisé pour commander le moyen de commutation (11, 13, 15, 17, 19) de telle sorte les fils de colonne (Sₖ, Sₖ₊₁, Sₖ₊₂) de chaque groupe de colonnes de lecture (ASGⱼ) sont commutés sur les amplificateurs de colonne associés (Vₖ₋₁, Vₖ, Vₖ₊₁, Vₖ₊₂) selon un schéma de commutation, le schéma de commutation étant sensiblement identique pour tous les groupes de colonnes de lecture (ASGⱼ₋₁, ASGⱼ) de chaque ligne du capteur d'images.

9. Capteur d'images selon l'une des revendications précédentes,
**caractérisé en ce que**
chacun des amplificateurs de colonne (Vₖ₋₁, Vₖ, Vₖ₊₁) associés au fil de colonne respectif (Sₖ) possède une probabilité de commutation par rapport au fil de colonne respectif (Sₖ), qui correspond à une fréquence relative par rapport aux amplificateurs de colonne (Vₖ₋₁, Vₖ, Vₖ₊₁) associés au fil de colonne respectif (Sₖ), à laquelle le fil de colonne respectif (Sₖ) est commuté sur l'amplificateur de colonne correspondant (Vₖ₋₁, Vₖ, Vₖ₊₁).

10. Capteur d'images selon la revendication 9,
**caractérisé en ce que**
le moyen de commande (23) est réalisé pour commander le moyen de commutation (11, 13, 15, 17, 19) de telle sorte que la probabilité de commutation est différente pour au moins deux des amplificateurs de colonne (Vₖ₋₁, Vₖ; Vₖ, Vₖ₊₁).

11. Capteur d'images selon la revendication 9 ou 10,
**caractérisé en ce que**
un amplificateur de colonne préférentiel (Vₖ) est associé à chacun des fils de colonne (Sₖ) avec une probabilité de commutation maximale, et les autres amplificateurs de colonne (Vₖ₋₁, Vₖ₊₁) associés au fil de colonne respectif (Sₖ) possèdent une probabilité de commutation respective qui est inférieure à la probabilité de commutation maximale.

12. Capteur d'images selon la revendication 11,
**caractérisé en ce que**
le moyen de commande (23) est réalisé pour commander le moyen de commutation (11, 13, 15, 17, 19) de telle sorte que la probabilité de commutation des amplificateurs de colonne associés (Vₖ₋₁, Vₖ₊₁) par rapport à un fil de colonne respectif (Sₖ) est d'autant plus petite que le fil de colonne correspondant (Sₖ) est éloigné de ce fil de colonne (Sₖ₋₁, Sₖ₊₁) auquel est attribué l'amplificateur de colonne correspondant (Vₖ₋₁, Vₖ₊₁) à titre d'amplificateur de colonne préférentiel,
et/ou
la probabilité de commutation des amplificateurs de colonne (Vₖ₋₁, Vₖ, Vₖ₊₁) associés au fil de colonne respectif (Sₖ) est gaussienne le long de la direction de ligne du capteur d'images par rapport à l'amplificateur de colonne préférentiel (Vₖ).

13. Capteur d'images selon l'une des revendications précédentes,
**caractérisé en ce que**
le fil de colonne respectif (Sₖ) est susceptible d'être connecté à chacun des amplificateurs de colonne associés (Vₖ₋₁, Vₖ, Vₖ₊₁) par un propre commutateur (A_{k,-}, Aₖ, A_{k,+}), les commutateurs connectés à un amplificateur de colonne respectif (Vₖ₋₁, Vₖ, Vₖ₊₁) formant un groupe de commutateurs, et de préférence, il est prévu un circuit de sélection de colonne (19) permettant de commuter conjointement quelques-uns au moins des commutateurs (A_{k,-}; Aₖ; A_{k,+}), les commutateurs (A_{k,-} ; Aₖ; A_{k,+}) commutables conjointement comprenant au maximum un commutateur (A_{k,-} ; Aₖ; A_{k,+}) de chaque groupe de commutateurs.

14. Procédé pour lire un capteur d'images, en particulier un capteur d'images CMOS, pour des caméras électroniques, le capteur d'images comportant une multitude de pixels photosensibles (P) disposés en lignes et en colonnes, dont les signaux sont amenés à des amplificateurs de colonne (Vₖ₋₂, Vₖ₋₁, Vₖ, Vₖ₊₁, Vₖ₊₂) du capteur d'images via une multitude de fils de colonne (Sₖ₋₂, Sₖ₋₁, Sₖ, Sₖ₊₁, Sₖ₊₂), un propre premier amplificateur de colonne (Vₖ) étant associé à chaque fil de colonne (Sₖ), le nombre d'amplificateurs de colonne (Vₖ₋₂, Vₖ₋₁, Vₖ, Vₖ₊₁, Vₖ₊₂) correspondant au nombre de fils de colonne (Sₖ₋₂, Sₖ-₁, Sₖ, Sₖ₊₁, Sₖ₊₂),
dans lequel
au moins un autre amplificateur de colonne (Vₖ₋₁, Vₖ₊₁) est associé au fil de colonne respectif (Sₖ), qui est associé en même temps également à au moins un autre fil de colonne (Sₖ₋₂, Sₖ₋₁ ; Sₖ₊₁, Sₖ₊₂), le fil de colonne respectif (Sₖ) étant commuté au choix sur l'un des amplificateurs de colonne (Vₖ₋₁, Vₖ₊₁) qui lui sont associés,
ceux des fils de colonne (Sₖ₋₁, Sₖ, Sₖ₊₁) auxquels est associé le même amplificateur de colonne (Vₖ) constituent un groupe de colonnes d'association (ZSGₖ) respectif,
il est prévu plusieurs groupes de colonnes d'association (ZSGₖ₋₁, ZSGₖ, ZSGₖ₊₁),
les fils de colonne (Sₖ₋₁, Sₖ, Sₖ₊₁) de chaque groupe de colonnes d'association (ZSGₖ) sont disposés directement au voisinage les uns des autres, et quelques-uns au moins des groupes de colonnes d'association (ZSGₖ₋₁, ZSGₖ, ZSGₖ₊₁) se chevauchent, les groupes de colonnes d'association (ZSGₖ₋₁, ZSGₖ, ZSGₖ₊₁) en chevauchement étant décalés les uns des autres à titre d'au moins une colonne respective,
**caractérisé en ce que**
au moins quatre fils de colonne (Sₖ₋₂, Sₖ₋₁, Sₖ, Sₖ₊₁, Sₖ₊₂) sont associés à chaque amplificateur de colonne (Vₖ).
